# EUROPEAN PATENT SPECIFICATION

(11) **EP 1 307 875 B1**
(45) Date of publication and mention of the grant of the patent: **11.10.2006**
(21) Application number: 01955342.9
(22) Date of filing: 11.07.2001
(51) Int. Cl.: G10L 15/26

(54) **SYSTEM FOR CONTROLLING AN APPARATUS WITH SPEECH COMMANDS**
SYSTEM ZUR STEUERUNG EINES GERÄTES MITTELS SPRACHBEFEHLEN
SYSTEME DE COMMANDE D'UN APPAREIL AVEC DES COMMANDES VOCALES

(30) Priority: 28.07.2000 EP 00202684
(43) Date of publication of application: 07.05.2003
(73) Proprietor: Koninklijke Philips Electronics N.V., 5621 BA Eindhoven (NL)
(72) Inventor: YEN, Chih, C., NL-5656 AA Eindhoven (NL); LEU, Ming, Y., NL-5656 AA Eindhoven (NL); TSAI, Wei, C., NL-5656 AA Eindhoven (NL); CHEN, Lin-Lin, NL-5656 AA Eindhoven (NL); LIN, Jeng-Weei, NL-5656 AA Eindhoven (NL); HUANG, Wei-Lun, NL-5656 AA Eindhoven (NL); HSU, Shuo-Hsiu, NL-5656 AA Eindhoven (NL)
(74) Representative: Deguelle, Wilhelmus H. G.
(86) International application number: PCT/EP2001/007962
(87) International publication number: WO 2002/011122

(56) References cited:
- EP-A- 0 867 860
- EP-A- 0 921 508
- WO-A-95/06309

## Description

### FIELD OF THE INVENTION

The invention relates to a system comprising an apparatus and a remote control for controlling said apparatus, the system including a speech processor for processing speech commands, the remote control comprising a microphone for enabling a user of said remote control to input said speech commands. The invention further relates to a remote control and an apparatus for use in the above system. The invention further relates to a method of controlling an apparatus, comprising a step of processing speech commands for controlling said apparatus.

### BACKGROUND OF THE INVENTION

Recent developments in speech recognition techniques have enabled users of electronic systems to control said systems by means of spoken commands. Often, such systems are used in a multi-user setting, e.g. a TV system is used by different members of a household. One of the problems with such systems is that two or more users may address the system at the same time. Since the users can utter the commands at any time and location, it is very difficult to resolve the input conflict. Even if the speakers utter their commands at different times, contradictory commands from different users still cause a problem. Obviously, discrimination of speech input is a serious concern for voice control with multiple users.

US-A-5,777,571 discloses a solution to this problem. Users are registered as authorized users, and their speech commands are distinguished from speech commands from other users by means of voice identification techniques. A problem of this solution is that voice identification is an expensive and still unreliable technique, and new or occasional users need to be introduced to the system for authorization. Such an introduction often involves a lengthy training phase. Furthermore, this solution cannot resolve the problem that many speakers speak at the same time.

EP 0 867 860 discloses a method and device for voice-operated remote control whereby the microphone(s) can be fitted in the remote control or in the appliance to be controlled by voice.

### OBJECT AND SUMMARY OF THE INVENTION

It is an object of the invention, as defined by the appended independent claims, to provide an improved system and method of the type defined in the opening paragraph. To that end, the invention provides a system wherein the system also comprises a further microphone for enabling further users of the system to input speech commands The system according to the invention thus provides (at least) two microphones for controlling the apparatus. One of said remote controls is located on the remote control and is arranged to pick up speech commands uttered by the user of the remote control. The other microphone is located elsewhere, e.g. on the apparatus or at a central place in the room, and is arranged to pick up speech commands uttered by other users of the system which are not currently operating the remote control. In this way it is achieved that the system can distinguish speech commands from the user operating the remote control on the one hand, and other users on the other hand. This guarantees that the speech commands uttered by the user who is operating the remote control are optimally recognized, since the microphone is located relatively close to the user and can have suitable characteristics to pick-up sounds from the appropriate direction only. When multiple users are speaking simultaneously, the system may give priority to signals received from the microphone on the remote control, so that at least commands uttered by the user of the remote control will be recognized and processed.

An embodiment of the system according to the invention is characterized by said further microphone being an omnidirectional microphone. In this way it is achieved that the position of the other users in the room is not critical. By contrast, the microphone on the remote control is preferably unidirectional and, when held in a normal manner, oriented so as to aim at its user's mouth when held in a normal manner.

An embodiment of the system according to the invention is characterized by said system comprising input designation means for user operably designating said microphone and/or said further microphone as a signal source to said speech processor. The system thus enables the speech commands obtained from the microphone and the further microphone to be selectively transmitted to the speech processor. For example, the speech processor may be controlled to process speech input from the microphone on the remote control only. Alternatively, the speech processor may be controlled to process speech input from the further microphone only, or from both the further microphone and the microphone on the remote control. Finally, the speech processor may be decoupled from both microphones, thus disabling the speech command facility. Preferably, the input designation means can be controlled via the remote control. For example, the remote control may comprise a button, which enables the user to switch between three different designations, e.g. accept no speech processing at all, accept speech commands from the microphone on the remote control only, and accept speech commands from the further microphone only. Alternatively, speech commands obtained from the further microphone may be accepted by default, while pressing a button on the remote control causes the microphone on the remote control to be temporarily designated as the input source of the speech processor.

### BRIEF DESCRIPTION OF THE DRAWINGS

These and other aspects of the invention are apparent from and will be elucidated, by way of a non-limitative example, with reference to the embodiment(s) described hereinafter. In the drawings,
Figure 1 shows a television receiver and a remote control as an embodiment of a system according to the invention,
Figure 2 shows a diagram of a television receiver as an embodiment of an apparatus according to the invention.

### DESCRIPTION OF EMBODIMENTS

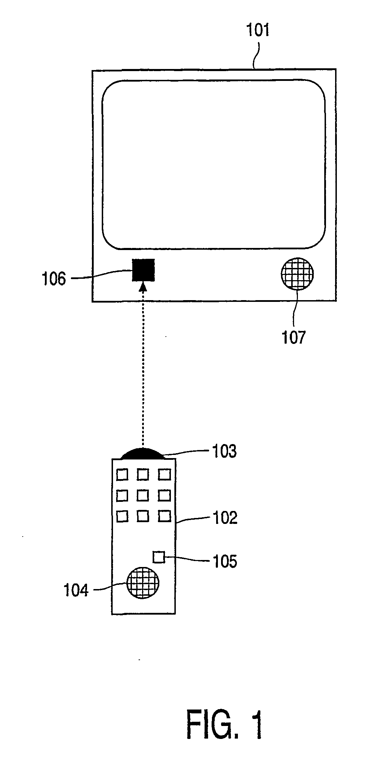

Figure 1 shows a television receiver 101 and a remote control 102 as an embodiment of a system according to the invention. The remote control 102 comprises an infrared (IR) transmitter 103, a microphone 104 and control elements including, inter alia, a button 105. The television receiver 101 comprises an IR receiver 106 and a further microphone 107. The television receiver can be operated by means of the remote control 102. For that purpose, the remote control 102 has a plurality of keys for controlling various functions of the television receiver 101. For example, the remote control 102 may have numerical keys, zap keys etc. which are well known in the art. Additionally, a user of the remote control 102 can enter speech commands via the microphone 104, which are then transmitted to the IR receiver 106 of the television receiver 101 and converted to corresponding control commands by a speech processor, described hereinafter. The further microphone 107 is an omnidirectional microphone, which picks up speech signals from any direction, thus enabling other users which are not currently holding the remote control 102 to control the television receiver 101 by means of voice commands. The button 105 controls input designation means, described hereinafter, for designating the microphone 104 and/or the further microphone 107 as a signal source for the speech processor.

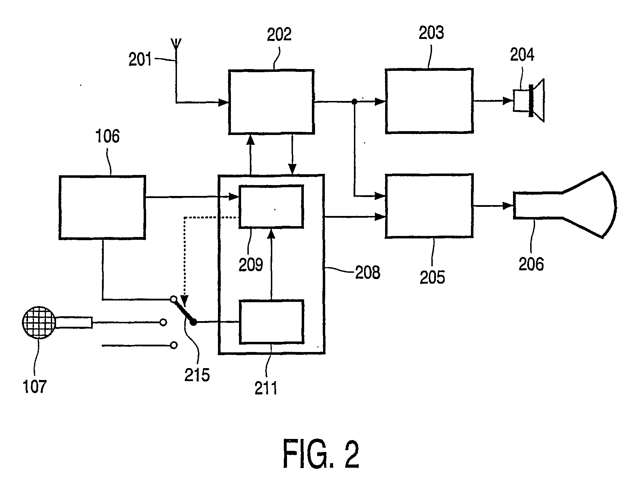

Figure 2 shows diagram of a television receiver as an embodiment of an apparatus according to the invention. For consistency and ease of understanding, the same reference numerals as in Fig.1 are used for items having functions similar to those presented in Figure 1. TV signals are received from the ether by an antenna 201 or, alternatively, from a cable network. One of the TV signals is selected by a tuner 202, decoded and split into an audio signal, a video signal and a data signal. The audio signal is further processed by an audio processor 203 and a loudspeaker 204. The video signal is further processed by a video processor 205 and presented on a screen 206. The data signal is transmitted to a central processing unit (hereinafter "CPU") 208, which comprises one or more microprocessors capable of executing program instructions. These program instructions comprise parts of software modules including, inter alia, a command interpreter 209, and a speech processor 211. The CPU 208 is capable of controlling functions of the TV set and transmitting data to the video processor 205 to be presented on the screen 206. The command interpreter 209 receives user commands from the IR receiver 106, which in turn receives IR signals from the remote control 102, and transmits them to the CPU 208 to be processed. For example, when the user enters a channel number the CPU 208 controls the tuner 202 to select the corresponding channel, and sends data to the video processor 205 to present feedback on the screen 206, e.g. in that the preset number, the channel name and the program category are displayed for a few seconds. When the user issues a zap-command, e.g. by pressing either of the up/down keys of the remote control, the same feedback is presented and the tuner 202 is controlled to select a channel which follows or precedes the current channel.

The CPU 208 is further capable of controlling a switch 215 which constitutes input designation means for the speech processor 211. The switch 215 can adopt three states. A first state of the switch 215 designates the microphone 104 of the remote control 102 as the signal source for the speech processor 211. Speech signals from the microphone 104 are converted into IR signals, received by the IR receiver 106 and transmitted to the switch 215. In the first sate of the switch 215 the speech signals thus obtained from the microphone 104 are input to the speech processor 211 and converted into control commands which are then transmitted to the command interpreter 209.

A second state of switch 215 designates the microphone 107 as the signal source for the speech processor 211. The microphone 107 is a part of the television receiver 101 and signals obtained from the microphone 107 are transmitted directly to a second contact of the switch 215.

A third state of switch 215 designates neither the microphone 104 nor the microphone 107 as the signal source for the speech processor 211, thus disabling speech input completely.

The switch 215 is controlled by the CPU 208 in response to control signals received from the IR receiver 106, which control signals are in turn generated in response to the user of the remote control 102 operating the button 105. After system initialization the switch 215 adopts the first state as described above and depicted in Fig. 2. If the user presses the button 105, the switch 215 adopts the second state, thus designating the microphone 107 as the signal source to the speech processor 211 and disabling the microphone 104. If the user presses the button 105 a second time, the switch 215 adopts the third state, thus designating neither the microphone 104 nor the microphone 107. Pressing the button 105 again restores the first state.

In an alternative embodiment the switch 215 can adopt a fourth state, wherein signals from both microphones are accepted. However, if signals are received from both microphones simultaneously, signals received from the microphone 107 are disregarded in favor of the signals received from the microphone 104.

In summary, the invention relates to a system comprising a speech processor for controlling an apparatus (101) with speech commands. The system according to the invention includes a remote control (102) having a microphone (104) for the input speech commands. The system also includes a further microphone (107) for enabling other users of the system to issue speech commands too. The system may have input designation means (105) for user operably designating said microphone (104) and/or said further microphone (170) as a signal source to the speech processor.

Although the invention has been described with reference to particular illustrative embodiments, variants and modifications are possible within the scope of the inventive concept. Thus, for example, the speech commands may be transmitted from the remote control by means of a radio frequency (RF) signals instead of IR signals. Furthermore, instead of or in addition to being included in the controlled apparatus, a speech processor may be included in the remote control. The input designation means may be controlled by means of a control element on the remote control or on the controlled apparatus. The control element may be a single-state toggle button as described above, or any other appropriate control element, such as a 'radio button' for each state, or a multi-position switch, each position of which corresponds to a particular state. The input designation means could be a switch as described hereinbefore, or a more sophisticated switching circuit under control of the speech processor itself. This would enable the input designation means to be controlled by means of dedicated speech commands irrespective of the currently selected state. The speech processor would then first try to detect such dedicated speech commands irrespective of whether it is allowed to accept speech commands from the respective microphone, and subsequently adjust the input designation in accordance with the dedicated speech commands. Preferably, only a user of the remote control would be allowed to control the input designation means in such manner.

More than two microphones may be used, which may be located at various positions within the system, e.g. on the apparatus and the remote control as already described, or in the vicinity of the controlled apparatus. The system may also comprise multiple remote controls, each comprising a microphone. Preferably, one of the remote controls serves as a master control and is the only remote control capable of controlling the input designation means.

The use of the verb 'to comprise' does not exclude the presence of any elements or steps other than those defmed in a claim. In the claims, any reference signs placed between parentheses shall not be construed as limiting the claim. The invention can be implemented by means of hardware comprising several distinct elements, and by means of a suitably programmed computer. In claims in which several means are defined, several of these means can be embodied by one and the same item of hardware.

## Claims

1. A system comprising an apparatus (101) and a remote control (102) for controlling said apparatus, the system including a speech processor (211) for processing speech commands, the remote control comprising a microphone (104) for enabling a user of said remote control to input said speech commands, wherein the system also comprises a further microphone (107) located elsewhere for enabling further users of the system to input speech commands.

2. A system as claimed in claim 1, said further microphone (107) being an omnidirectional microphone.

3. A system as claimed in claim 1 or 2, said further microphone (107) being comprised by said apparatus (101).

4. A system as claimed in any one of claims 1 to 3, said system comprising input designation means (209,215) for user operably designating said microphone (104) and/or said further microphone (170) as a signal source to said speech processor (211).

5. A system as claimed in claim 4, said input designation means (209,215) being capable of controlling the speech processor (211) to process speech input from said microphone (104) only.

6. A system as claimed in claim 4, said input designation means (209,215) being capable of controlling the speech processor (211) to process speech input from said further microphone (107) only.

7. A system as claimed in claim 4, said input designation means (209,215) being capable of controlling the speech processor (211) to process speech input from both said microphone (104) and said further microphone (107), said microphone (104) having priority over said further microphone (107).

8. A remote control (102) for use in a system as claimed in any one of claims 1 to 7, comprising a microphone (104) for enabling a user of said remote control to input speech commands for processing by a speech processor (211), said remote control comprising input designation means for the user to operably designate said microphone (104) and/or a further microphone (107) as a signal source to said speech processor.

9. An apparatus (101) for use in a system as claimed in any one of claims 1 to 7, comprising a speech processor (211) for processing speech commands, and input designation means (209,215) for the user to operably designate a microphone (104) comprised by a remote control (102) of said apparatus and/or a further microphone (107) comprised by said apparatus as a signal source to said speech processor.

10. A method of controlling an apparatus (101), comprising a step of processing speech commands for controlling said apparatus, and a step of a user operably designating a microphone (104) comprised by a remote control of said apparatus and/or a further microphone (107) comprised by said apparatus as a signal source to said speech processing.

## Patentansprüche

1. System, ein Gerät (101) und eine Fernbedienung (102) zum Steuern des Gerätes umfassend, wobei das System einen Sprachprozessor (211) zum Ausführen von Sprachbefehlen aufweist, und die Fernbedienung ein Mikrofon (104) umfasst, um einem Benutzer der Fernbedienung zu ermöglichen, die Sprachbefehle einzugeben, wobei das System auch ein weiteres Mikrofon (107) umfasst, welches anderswo angeordnet ist, um weiteren Benutzern des Systems zu ermöglichen, Sprachbefehle einzugeben.

2. System nach Anspruch 1, wobei das weitere Mikrofon (107) ein ungerichtetes Mikrofon ist.

3. System nach Anspruch 1 oder 2, wobei das Gerät (101) das weitere Mikrofon (107) umfasst.

4. System nach einem der Ansprüche 1 bis 3, wobei das System Eingabebestimmungsmittel (209, 215) für einen Benutzer umfasst, um das Mikrofon (104) und/oder das weitere Mikrofon (170) als eine Signalquelle für den Sprachprozessor (211) betriebsfähig zu bestimmen.

5. System nach Anspruch 4, wobei das Eingabebestimmungsmittel (209, 215) in der Lage ist, den Sprachprozessor (211) zu steuern, nur Spracheingaben von dem Mikrofon (104) zu verarbeiten.

6. System nach Anspruch 4, wobei das Eingabebestimmungsmittel (209, 215) in der Lage ist, den Sprachprozessor (211) zu steuern, nur Spracheingaben von dem weiteren Mikrofon (107) zu verarbeiten.

7. System nach Anspruch 4, wobei das Eingabebestimmungsmittel (209, 215) in der Lage ist, den Sprachprozessor (211) zu steuern, Spracheingaben sowohl von dem Mikrofon (104) als auch von dem weiteren Mikrofon (107) zu verarbeiten, wobei das Mikrofon (104) gegenüber dem weiteren Mikrofon (107) Priorität aufweist.

8. Fernbedienung (102) zur Verwendung in einem System nach einem der Ansprüche 1 bis 7, umfassend ein Mikrofon (104), um einem Benutzer der Fernbedienung zu ermöglichen, Sprachbefehle zum Ausführen von einem Sprachprozessor (211) einzugeben, die Fernbedienung Eingabebestimmungsmittel für den Benutzer umfassend, um das Mikrofon (104) und/oder ein weiteres Mikrofon (107) als eine Signalquelle für den Sprachprozessor betriebsfähig zu bestimmen.

9. Gerät (101) zur Verwendung in einem System nach einem der Ansprüche 1 bis 7, umfassend einen Sprachprozessor (211) zum Ausführen von Sprachbefehlen und Eingabebestimmungsmittel (209, 215) für den Benutzer, um ein Mikrofon (104), welches in eine Fernbedienung (102) des Gerätes einbezogen ist, und/oder ein weiteres Mikrofon (107), welches in das Gerät einbezogen ist, als eine Signalquelle für den Sprachprozessor betriebsfähig zu bestimmen.

10. Verfahren zum Steuern eines Gerätes (101), umfassend einen Schritt des Ausführens von Sprachbefehlen zum Steuern des Gerätes und einen Schritt eines durch einen Benutzer betriebsfähig Bestimmens eines Mikrofons (104), welches in eine Fernbedienung des Gerätes einbezogen ist, und/oder eines weiteren Mikrofons (107), welches in das Gerät einbezogen ist, als eine Signalquelle für die Sprachverarbeitung.

## Revendications

1. Système comprenant un appareil (101) et un dispositif de commande à distance (102) pour commander ledit appareil, le système comprenant un processeur de la parole (211) pour traiter des instructions vocales, le dispositif de commande à distance comprenant un microphone (104) pour permettre à un utilisateur dudit dispositif de commande à distance d'introduire lesdites instructions vocales dans lequel le système comprend également un nouveau autre microphone (107) qui se situe autre part pour permettre à de nouveaux autres utilisateurs du système d'introduire des instructions vocales.

2. Système selon la revendication 1, ledit nouveau autre microphone (107) étant un microphone omnidirectionnel.

3. Système selon la revendication 1 ou 2, ledit nouveau autre microphone (107) étant renfermé par ledit appareil (101).

4. Système selon l'une quelconque des revendications précédentes 1 à 3, ledit système comprenant des moyens de désignation d'entrée (209, 215) pour que l'utilisateur désigne d'une manière praticable ledit microphone (104) et/ou ledit nouveau autre microphone (107) en tant qu'une source de signal pour ledit processeur de la parole (211).

5. Système selon la revendication 4, lesdits moyens de désignation d'entrée (209, 215) étant capables de commander le processeur de la parole (211) pour traiter seulement une entrée de la parole à partir dudit microphone (104).

6. Système selon la revendication 4, lesdits moyens de désignation d'entrée (209, 215) étant capables de commander le processeur de la parole (211) pour traiter seulement une entrée de la parole à partir dudit nouveau autre microphone (107).

7. Système selon la revendication 4, lesdits moyens de désignation d'entrée (209, 215) étant capables de commander le processeur de la parole (211) pour traiter une entrée de la parole en provenance dudit microphone (104) ou en provenance dudit nouveau autre microphone (107), ledit microphone (104) ayant priorité sur ledit nouveau autre microphone (107).

8. Dispositif de commande à distance (102) pour être utilisé dans un système selon l'une quelconque des revendications précédentes 1 à 7, comprenant un microphone (104) pour permettre à un utilisateur dudit dispositif de commande à distance d'introduire des instructions vocales pour être traitées par un processeur de la parole (211), ledit dispositif de commande à distance comprenant des moyens de désignation d'entrée pour que l'utilisateur désigne d'une manière praticable ledit microphone (104) et/ou un nouveau autre microphone (107) en tant qu'une source de signal pour ledit processeur de la parole.

9. Appareil (101) pour être utilisé dans un système selon l'une quelconque des revendications précédentes 1 à 7, comprenant un processeur de la parole (211) pour traiter des instructions vocales et des moyens de désignation d'entrée (209, 215) pour que l'utilisateur désigne d'une manière praticable ledit microphone (104) qui est renfermé par un dispositif de commande à distance (102) dudit appareil et/ou un nouveau autre microphone (107) qui est renfermé par ledit appareil en tant qu'une source de signal pour ledit processeur de la parole.

10. Procédé de commande d'un appareil (101), comprenant une étape consistant à traiter des instructions vocales pour commander ledit appareil et une étape pour un utilisateur consistant à désigner d'une manière praticable un microphone (104) qui est renfermé par un dispositif de commande à distance dudit appareil et/ou un nouveau autre microphone (107) qui est renfermé par ledit appareil en tant qu'une source de signal pour ledit processeur de la parole.
